# EUROPEAN PATENT APPLICATION

(11) **EP 4 650 938 A1**
(43) Date of publication of application: **19.11.2025**
(21) Application number: 24176355.6
(22) Date of filing: 16.05.2024
(51) Int. Cl.: G06F 7/544, G06F 7/62

(54) **METHOD FOR END-OF-COMPUTATION FLAG GENERATION IN A PULSE GENERATION CIRCUIT FOR AN IN-MEMORY COMPUTING SYSTEM**

(71) Applicant: Universität Zürich, 8006 Zürich (CH)
(72) Inventor: Kim, Kwantae, 8050 Zürich (CH); Liu, Shih-Chii, 8006 Zürich (CH)
(74) Representative: Vesterinen, Jussi Tapio

(57) **Abstract**

The present invention proposes a novel integrated circuit architecture for in-memory computing matrix-vector multipliers such that the computational latency is inversely proportional to the incoming magnitude of neuron activations. The main contribution of the present invention is that the proposed circuit is self-aware of the computational latency. At the end of the generated data pulses in which the number of pulses is proportional to the magnitude of incoming neuron activations, the circuit generates an end-of-computation flag such that the computing circuit can shorten the processing time of matrix-vector multiplications. The present invention can be integrated with any kind of analogue readout circuit, and the proposed circuit can be integrated with any kind of memory elements.

## Description

### TECHNICAL FIELD

The present invention relates to a method of processing for in-memory computing memory arrays, such as matrix-vector multipliers. More specifically, the present invention proposes a method to generate an end-of-computation flag in a pulse generation circuit used for instance in connection with in-memory computing matrix-vector multipliers. The invention equally relates to a related computer program product and a hardware configuration.

### BACKGROUND OF THE INVENTION

In-memory computing (IMC) systems store information in the main random-access memory (RAM) of computers and perform calculations at the memory cell level, rather than moving large quantities of data between the main RAM and arithmetic logic units for each computation step. Stored data can in this manner be accessed much more quickly, and computation within the memory does not incur additional energy consumption for data movements. Thus, compute-in-memory allows data to be processed with higher energy efficiency and analysed with faster reporting and decision-making. Efforts are ongoing to improve the performance of compute-in-memory systems.

One approach to improve the performance is a pulse-generation method for in-memory computing matrix-vector multipliers as described in US11322195B2, where the incoming neuron activations are converted into multiple pulses. As described in US11322195B2, the number of pulses is proportional to the magnitude of input data. The generated pulses are used for analogue domain charge-based multiplication and accumulation with multiple 8-transistor static random-access memory (SRAM) cells. Performing calculations at the memory cell level and utilising SRAM cells, which are faster than traditional data storages, enables faster processing and analysis of data. However, the main shortcoming of the method disclosed in US1 1322195B2 is that the performance of the circuit is far from optimal because the processing time of matrix-vector multiplications is not optimal especially if only few pulses are generated per time window. In particular, the method described in US11322195B2 is not self-aware of the computational latency, i.e. the circuit stays idle if only few pulses are generated because the pulse-generating circuit is synchronised with the worst-case processing time window (i.e. the maximum number of pulses) among all the digital counters of the input interface.

### SUMMARY OF THE INVENTION

The objective of the present invention is thus to overcome at least some of the above limitations relating to in-memory computing. More specifically, the aim of the present invention is to improve the performance of in-memory computing systems by shortening the processing time of matrix-vector multiplications.

According to a first aspect of the present invention, there is provided a method of computing for an in-memory computing system as recited in claim 1.

According to a second aspect of the present invention, there is provided a computer program product comprising instructions for implementing the steps of the method according to the first aspect of the present invention when loaded and run on a computing apparatus or an electronic device.

According to a third aspect of the present invention, there is provided a computing device for an in-memory computing memory as recited in claim 15.

Other aspects of the present invention are recited in the dependent claims attached hereto.

The main novelty of the present invention is that the circuit is made self-aware of the computational latency. At the end of the generated data pulses in which the number of pulses is proportional to the magnitude of incoming neuron activations, the circuit generates an end-of-computation flag such that the computing circuit can shorten the processing time of matrix-vector multiplications. The present invention improves the latency of in-memory computing hardware as it avoids the idle state as much as possible to be in the active state and thus processing time is maximally utilised without wasting it. The present invention seamlessly supports the sparsity management of input neuron activations without requiring any additional circuitry, e.g., sparsity index encoder/decoder, since it is operating based on the input magnitude. In addition, the present invention optionally exploits a duty-cycle-controlled clock sprinting scheme to further reduce the idle time of the pulse generation circuit. The present invention can be beneficial, especially for computing matrix-vector multiplications where the input operands are mostly in low-magnitude, such as deep neural networks (DNN). The present invention is generally usable for in-memory computing circuits with arbitrary memory elements regardless of static, dynamic, volatile, or non-volatile types, which include static random-access memory (SRAM), dynamic random-access memory (DRAM), resistive random-access memory (ReRAM), phase-change memory (PCM), magnetoresistive random-access memory (MRAM), ferroelectric random-access memory (FeRAM), etc.

### BRIEF DESCRIPTION OF THE DRAWINGS

Other features and advantages of the invention will become apparent from the following description of a non-limiting example embodiment, with reference to the appended drawings, in which:
- Figure 1 schematically illustrates an overview of an in-memory computing matrix-vector multiplier according to the present invention, and where a new pulse-generation method according to the present invention may be implemented;
- Figure 2 schematically illustrates an overview of an end-of-computation (EOC) generation circuit, implemented within the in-memory computing driver as shown in Figure 1;
- Figure 3 schematically illustrates an IMC counter, as shown in Figure 2;
- Figure 4 is a flow chart describing the operations carried out in the circuits of Figures 2 and 3;
- Figure 5 describes an optional duty-cycle-controlled clock sprinting scheme;
- Figure 6 schematically illustrates an example circuit configured to adjust the duty cycle; and
- Figure 7 is a diagram showing the comparison of the computation latency according to the method of the present invention when compared to a baseline design referring to the worst-case synchronised pulse-count modulation method, as used in US11322195B2.

### DETAILED DESCRIPTION OF AN EMBODIMENT OF THE INVENTION

An embodiment of the present invention will now be described in detail with reference to the attached figures. Identical or corresponding functional and structural elements which appear in different drawings are assigned the same reference signs. It is to be noted that the use of words "first" and "second" may not imply any kind of particular order or hierarchy unless such order or hierarchy is explicitly or implicitly made clear in the context. In the present description, signal value '0' represents a signal low value, or logic zero, while signal value '1' represents a signal high value, or logic high. In other words, signal value '0' may be considered to be a first or second signal value, while signal value '1' may be considered to be a second or first signal value. Similarly, flag value '0' may be considered to be a first flag value or a second flag value, while flag value '1' may be considered to be a second flag value or a first flag value. Furthermore, counter value '0' is in the following also referred to as a first counter value.

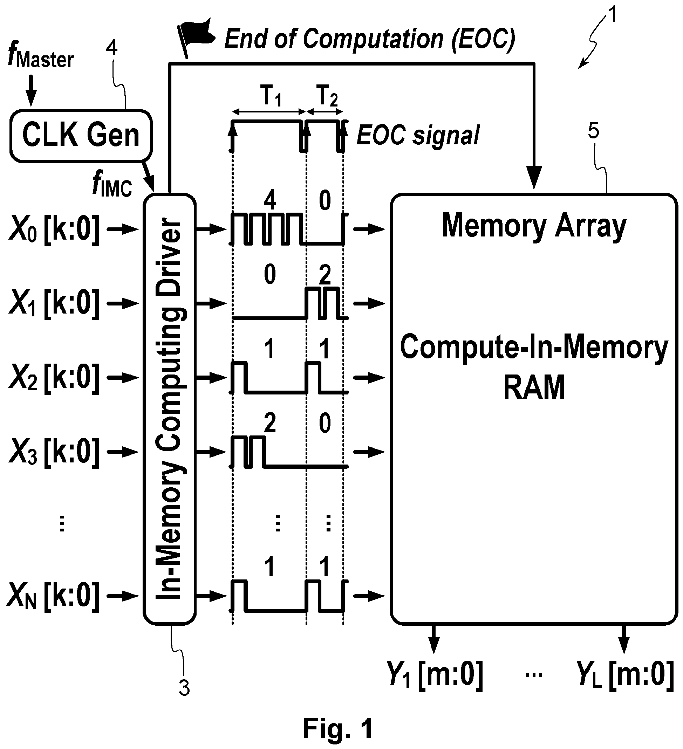

Figure 1 shows an overview of the proposed in-memory computing system 1, which in this example is a matrix-vector multiplier, and where the proposed pulse-generation method may be implemented. The system comprises an in-memory computing driver (IMC driver) 3, a clock generator 4, and a memory array 5. The clock generator is configured to receive a first clock signal, which is a master clock signal *f*_{Master}, such that the clock generator is configured to generate a second clock signal *f*_{IMC} also referred to as an in-memory computing clock signal, which is a local clock signal, from the master clock signal. The second clock signal is then subsequently fed to the IMC driver 3. The k+1-bit input neuron data from input neurons (*X*_{0, 1, ..., N}) are converted by the IMC driver into pulses or pulsed signals, which are configured to be fed into the memory array 5. The number of pulses represents the magnitude of the input data and is thus in this case directly proportional to the magnitude of the input data. It is to be noted that the notations [k:0] and [m:0] in Figure 1 mean that the input data of the IMC driver 3 of a given input neuron X are represented in k+1 bits, and the output data of a given memory cell are represented in m+1 bits, respectively. For instance, if k=2, then the input data of the IMC driver 3 of a given input neuron *X* are represented in three bits, having bit positions 1, 2, and 3. In this case, the three bit values can represent magnitude values comprised between 0 and 7 ([0:7]). The memory array 5 is in this example a compute-in-memory RAM, such as SRAM, DRAM, ReRAM, PCM, MRAM, or memory FeRAM.

Time windows T₁, T₂, etc. define a computational or counting cycle for the memory array 5. According to the present invention, the length of these time windows is dynamically adjusted based on the maximum number of pulses transferred in a given time window. According to prior art solutions, the length of these time windows is fixed. For instance, the length of these time windows in the solution disclosed in US11322195B2 is 7. According to the present invention, for example:
- In the time window T₁, X₀ = 4 outputs 4 pulses, X₁ = 0 outputs no pulses, X₂ = 1 outputs 1 pulse, X₃ = 2 outputs 2 pulses, and X_{N} = 1 outputs 1 pulse.
- In the time window T₂, X₀ = 0 outputs no pulses, X₁ = 2 outputs 2 pulses, X₂ = 1 outputs 1 pulse, X₃ = 0 outputs no pulses, and X_{N} = 1 outputs 1 pulse.

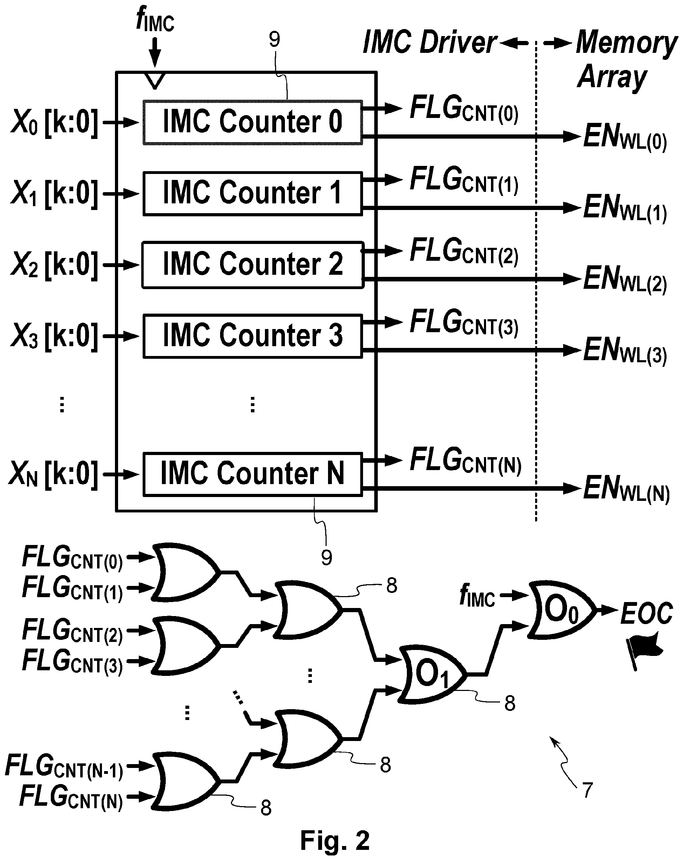

Determining the window duration (T₁, T₂, ...), which is the period of the end-of-computation (EOC) signal, is the main novelty of the present invention. As described in Figure 2, the proposed IMC driver 3 generates the EOC signal according to the maximum magnitude of input neurons (*X*_{0,1, ..., N}). The EOC signal may be considered to be a clock signal, and in particular in this case a third clock signal. For example:
- In the time window T₁, X₀ = 4 is the greatest magnitude among all the input neurons (*X*_{0,1, ..., N}). The EOC signal is synchronised to the last pulse of X₀ = 4. Meanwhile, the other input neurons stay idle.
- In the time window T₂, X₁ = 2 is the largest magnitude among all the input neurons (*X*_{0,1, ..., N}). The EOC signal is synchronised to the last pulse of X₁ = 2. Meanwhile, the other input neurons stay idle.

As is shown in Figure 1, the clock *f*_{IMC} is applied to the IMC driver 3. *f*_{IMC} is generated by the clock generator 4 whose clock port is driven by *f*ₘₐₛₜₑᵣ. The generated pulses are applied to the memory array 5 (which in this case is a compute-in-memory matrix). The results of matrix-vector multiplication are available with m+1-bit output neurons (*Y*_{0,1, ..., L}).

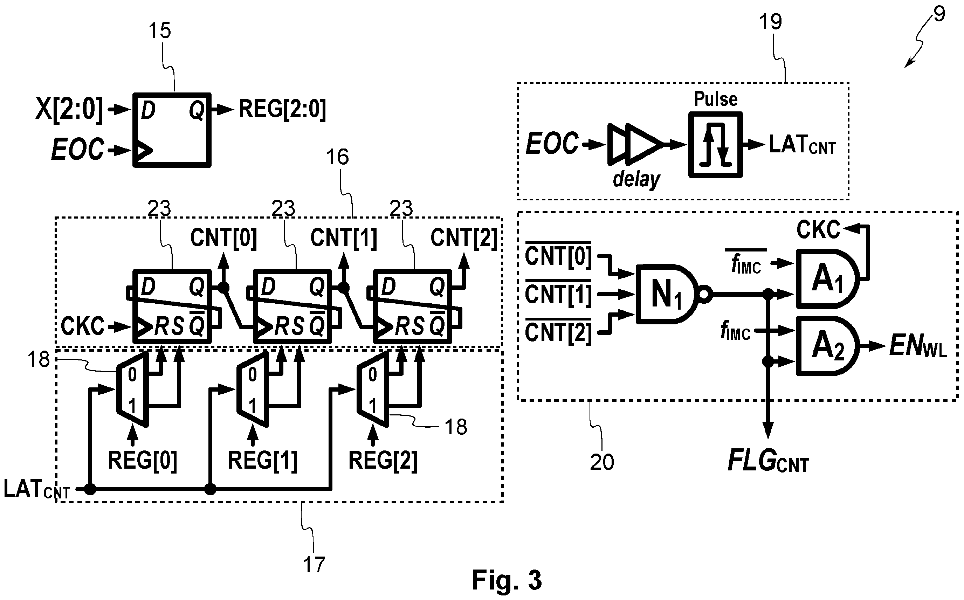

Figure 2 shows an overview of the EOC signal generation circuit 7 comprising in this case a set of logic OR gates 8 and implemented within the IMC driver 3 as shown in Figure 1. Each k+1-bit input neuron data are applied row-wise to a respective IMC counter 9 through input data or bit lines (one input bit line per IMC counter 9). A counter flag signal *FLG*_{CNT(N)} and a word line enable signal *EN*_{WL(N)} are the outputs of the IMC counters 9 (illustrated in more detail in Figure 3). The *EN*_{WL(N)} signals or IMC driver output signals represent the number of pulses that are converted from the input neurons (*X*_{0,1, ..., N}), as shown in Figure 1. *EN*_{WL(N)} signals are directed to the memory array side (shown in Figure 1) while *FLG*_{CNT(N)} signals are directed internally within the IMC driver side. In this example, the falling edge of a *FLG*_{CNT(N)} signal represents the condition that the N^{th} IMC counter 9 reaches '0', where the IMC counter is a down-counter, counting from the maximum or current value to zero value. In this example, the *FLG*_{CNT(N)} signal stays '1' if the N^{th} IMC counter is still counting.

In this example, the EOC signal goes to the '0' state, when all the N+1 IMC counters reach the '0' state, and it stays in the '0' state until the next rising edge of fimc. The EOC signal is generated by combining all N+1 *FLG*_{CNT(N)} signals and the fimc signal by OR gating. The EOC signal is shared between all the N+1 IMC counters 9 ensuring all the N+1 IMC counters are synchronised. If any IMC counter is still down counting, such that the falling edge of the *FLG*_{CNT(N)} signal is not generated (at least one *FLG*_{CNT(N)} = 1), the output of O₁ gate as shown in Figure 2 stays '1' by OR gating. When the output of O₁ gate stays '1', the value of the EOC signal is in this example always '1'. This ensures that all flip-flops in the IMC counters as shown in Figure 3 except for down-counters within the N+1 IMC counters stay inactive since no rising edges of the EOC signal are generated. Flip-flops are digital circuits used to implement registers and counters and are characterised in Figure 3 by parameters D, RS, Q, and Q̅. Furthermore, the symbol '>' indicates that the device is edge-triggered. If all the N+1 IMC counters 9 finished the down-counting and thus all of them generated a falling edge (all *FLG*_{CNT(N)} = 0), the output of O₁ gate goes to '0' with a falling edge of *f*_{IMC}. When the output of O₁ gate goes to '0', the EOC signal goes to '0' with a falling edge of *f*_{IMC} and stays in that state until the next rising edge of fi_{MC}. At this moment, the EOC signal generates a rising edge. If all the N+1 IMC counters 9 receive '0's from their respective input neuron (*X*_{0,1, ..., N}), the output of O₁ gate stays '0' and thus the EOC signal is nothing but the buffered *f*_{IMC} signal.

Figure 3 shows a schematic diagram of the IMC counter 9. Figure 3 shows an example that uses a three-bit input neuron (*X*_{0,1, ..., N}), but the input bit precision can be arbitrarily chosen. Since this example uses a three-bit input neuron case, register (REG), counter (CNT), and multiplexers are drawn accordingly with three bits. The respective IMC counter 9 comprises: 1) an input register 15 that outputs REG[2:0], 2) an internal counter 16, which in this example is a down-counter, that outputs CNT[2:0], 3) a reset operator 17 with multiplexers 18 that receives REG[2:0] as well as a latch signal LAT_{CNT} as inputs, 4) a pulse generator 19 that receives the EOC signal as input and outputs LAT_{CNT}, and 5) a flag controller 20 that outputs *EN*_{WL(N)} and *FLG*_{CNT(N)} signals, as well as a CKC signal, which is a fourth clock signal. The counter 16 comprises an individual flip-flop circuit 23 for each bit position of the respective input neuron data set such that a respective individual flip-flop circuit is arranged to output a single bit value of the respective flip-flop circuit. The flag controller 20 comprises an arrangement of logic gates and is configured to receive as inputs the single bit values of the respective flip-flop circuit 23 or their inverted values and output the flag signal, the signal pulses, and a clock signal to be fed to the counter 16. As is shown in Figure 3, the flag controller 20 in this example comprises a logic NAND gate N₁, a first AND gate A₁, and a second AND gate A₂. Inverted counter output data sequence is configured to be fed into the NAND gate N₁, whose output is inverted. The first AND gate A₁ is configured to output the CKC signal, which is configured to be fed into the counter 16. The reset operator 17 comprises an individual multiplexer circuit for each bit position of the respective input neuron data set to feed an individual bit to a respective individual flip-flop circuit 23 of the counter 16.

The input neurons (*X*_{0,1, ..., N}) are in this example registered with REG[2:0] at the rising edge of the EOC signal. After a short delay, LAT_{CNT}, which is a short pulse, is generated. LAT_{CNT} is used to initialise the counter 16 according to the input neuron values.

If X[2:0] is non-zero such that REG[2:0] is also non-zero, then at least one bit of CNT[2:0] will be initialised as '1' thereby making the output of the NAND gate N₁ '1', which is *FLG*_{CNT}. Then the first AND gate A₁ becomes a buffer of negative or inverted *f*_{IMC} signal to CKC, which is a counter-clock. In this case, the CKC signal keeps down-counting the initialised flip-flops 23 until CNT[2:0] reaches the '0' state. Since *FLG*_{CNT} is '1', *EN*_{WL} is outputting pulses while the counter is down-counting. If the CNT[2:0] reaches '0', the output of the NAND gate N₁ (*FLG*_{CNT}) becomes '0' and thus both CKC and *EN*_{WL} are gated, i.e. kept to '0', ensuring the counter is inactive.

For example, if X[2:0] = 3, then:
- REG[2:0] is registered as '011' and thus the counter 16 is initialised as '011' at the LAT_{CNT} pulse.
- The *FLG*_{CNT} is '1' and thus every falling edge of *f*_{IMC} signal activates the counter 16 to count down.
- Since it requires three pulses to count CNT[2:0] down to '0', *EN*_{WL} outputs 3 pulses which are synchronised with *f*_{IMC}.
- When the counter 16 reaches '0', the *FLG*_{CNT} becomes '0' and *EN*_{WL} generates no pulses.
- When the rising edge of the EOC signal comes in, the same operating cycles begin.
- The magnitude of X[2:0] determines how many cycles are required to make *FLG*_{CNT} signal to '0', and thus the EOC signal to '0', seamlessly realising the magnitude-aware computation latency.

For example, if X[2:0] = 0, then:
- REG[2:0] is registered as '000' and thus the counter 16 is initialised as '000' at the LAT_{CNT} pulse.
- The *FLG*_{CNT} signal stays '0' and thus *EN*_{WL} signal generates no pulses, seamlessly supporting the input sparsity management without requiring any additional circuitry.
- When the rising edge of the EOC signal comes in, the same operating cycles begin.

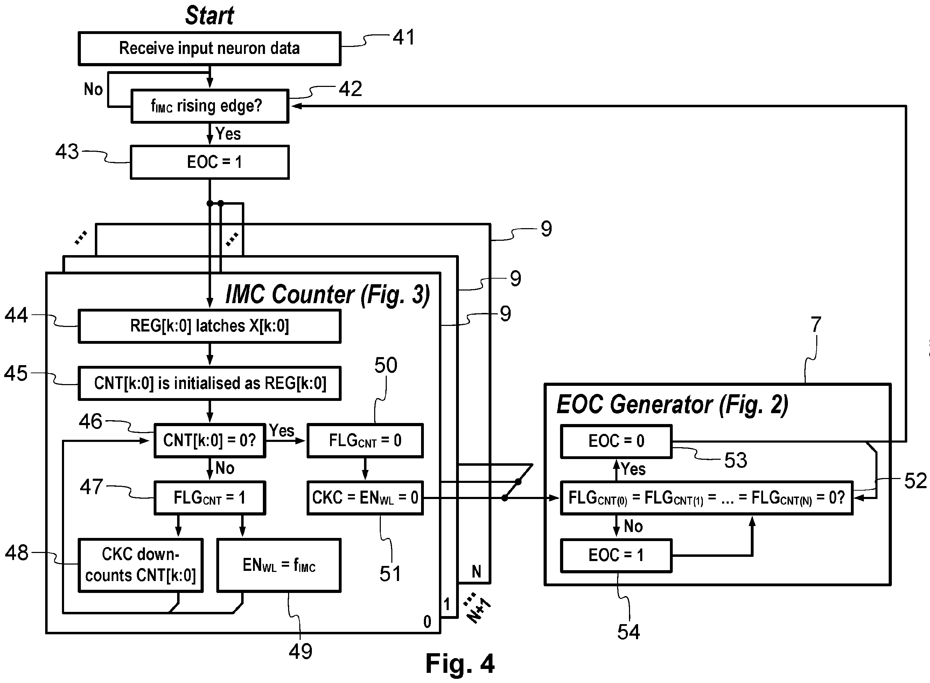

The flow chart of Figure 4 summarises the operations described in connection with Figures 2 and 3. At step 41, the IMC counters 9 receive a set of input neuron data sets such that a respective IMC counter 9 receives a respective input neuron data set or sequence, which in this case is a bit sequence. At step 42, it is determined whether or not a rising edge (or a falling edge in another implementation) of the *f*_{IMC} signal is detected. In the affirmative, the EOC signal is set to '1' at step 43. At step 44, the respective register 15 registers or stores the respective input data sequence X[k:0]. At step 45, the respective counter CNT[k:0] 16 is initialised with X[k:0]. At step 46, it is determined whether or not the respective counter value equals a given value, which in this case is value '0'. If the respective counter value is not yet '0', then at step 47 *FLG*_{CNT} signal is set to '1'. At step 48, the CKC signal is used to down-count the counter CNT[k:0] 16. In other words, at this step, a given value, in this case value '1', is subtracted from (or added to if the counter 16 is configured as an up-counter) the current counter value at a given frequency defined by the signal CKC. At step 49, the *EN*_{WL} signal is set to *f*_{IMC}. In other words, the waveform and/or frequency of *EN*_{WL} is set to follow the frequency and/or waveform of *f*_{IMC}. Steps 48 and 49 may be implemented substantially mutually simultaneously. From steps 48 and 49 the process continues at step 46, where it is again determined whether or not the counter value is '0'. Steps 47, 48, and 49 form an adjustment cycle during which the value of the counter CNT[k:0] 16 is updated, i.e., in this example the value of the counter is decreased by one at every adjustment cycle. If at step 46 it is determined that the counter value equals '0', then the process continues at step 50, where in this example the respective *FLG*_{CNT} signal is set to '0'. Then at step 51, in this example, both the CKC signal and the *EN*_{WL} signal are set to '0'. It is to be noted that steps 43 to 51 are carried out for each IMC counter 9, in this case in parallel, although in another implementation, at step 43, the EOC signal may be centrally set to '1' for all of the IMC counters 9, or at least for more than one IMC counter. The process then continues at step 52, where it is determined whether or not all the flag counter values equal '0'. In the affirmative, at step 53, the EOC signal is in this example set to '0' at the next falling edge of *f*_{IMC}. If this is not the case, then the EOC signal remains at level '1' (step 54). From step 54 the process continues to step 52. The change of the EOC signal from state '1' to state '0' in this case is indicative of the end of the signal computation cycle. From step 53 the process continues to step 42, where the next cycle begins. The method advantageously also comprises the step of feeding the EOC signal to the memory array 5. As soon as the EOC signal is generated, it may be continuously fed to the memory array 5.

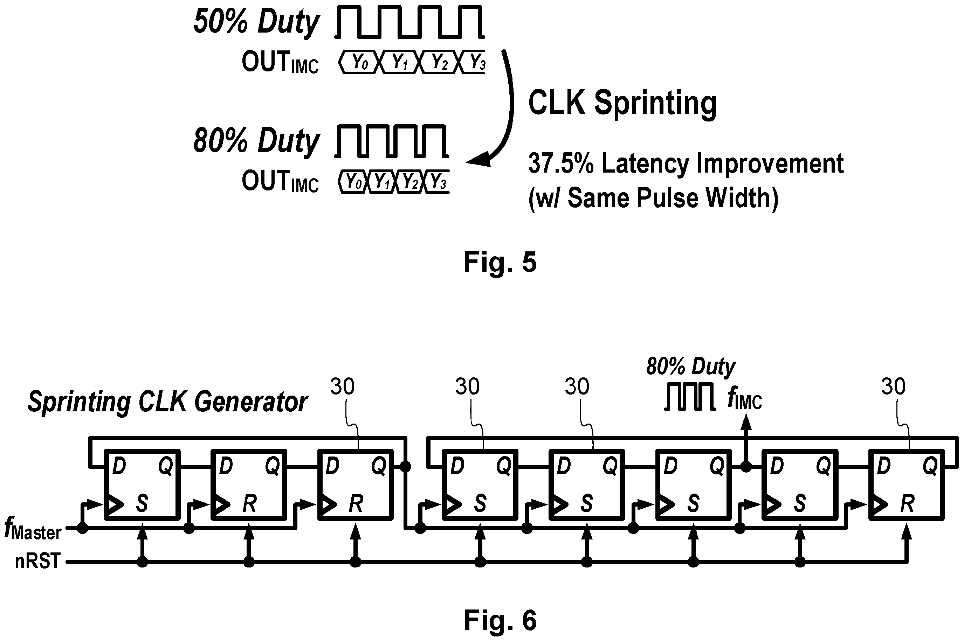

Figures 5 and 6 describe the optional duty-cycle-controlled clock sprinting scheme. Figure 5, where OUT_{IMC} corresponds to Y[m:0] in Figure 1, illustrates the principle and Figure 6 shows a schematic circuit configuration for implementing the clock sprinting scheme. If the input neuron data from the input neurons (*X*_{0,1, ..., N}) are represented with the pulse-count modulation method, with a 50% duty cycle, *EN*_{WL(N)} data also maintain a 50% duty cycle. In this condition, the in-memory computing circuit, i.e., the IMC driver 3, stays idle for 50% of the time during *EN*_{WL(N)} signal's '0' state. According to this variant of the invention, the duty cycle of the in-memory computing clock *f*_{IMC} is set to greater than 50%, for example greater than 60% or 70%, to hide the idle time. In this figure, a duty cycle of 80% is adopted as an example. However, an even higher percentage of the duty cycle can be used by adding and rearranging flip-flops 30, which in this configuration are arranged in two rings in a series configuration. nRST shown in Figure 6 is a reset signal for the flip-flops 30. With an 80% duty-cycled IMC clock and the same pulse width, this variant of the present invention achieves 37.5% computation latency improvement compared to the baseline 50% duty-cycle method.

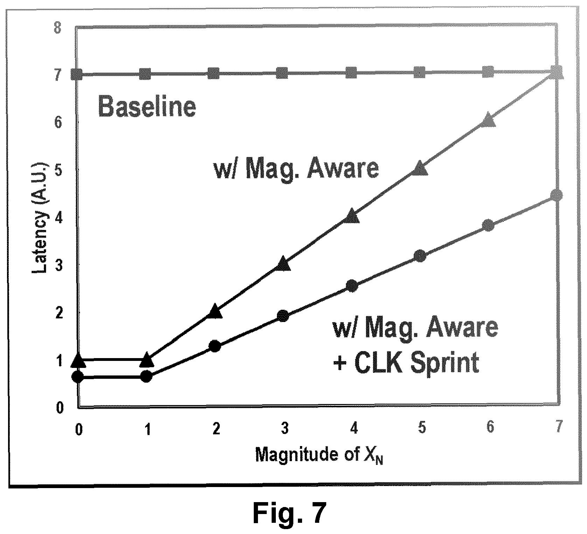

Figure 7 shows the comparison of the computation latency of the present invention. Baseline design refers to the worst-case synchronised pulse-count modulation method, as used in US11322195B2. For example, with a three-bit (000₂ to 111₂) input neuron, the possible set of the number of pulses is 0 to 7. The baseline design synchronises the computation latency to the worst case, 7 pulses, such that it is not input-magnitude-aware. On the other hand, the proposed magnitude-aware end-of-computation method adaptively scales the in-memory computing latency achieving up to 7x smaller latency than the baseline design case. Furthermore, by applying the magnitude-aware method and clock sprinting method altogether, the present invention can achieve another 37.5% latency improvement.

To summarise the above teachings, one aspect of the present invention proposes a novel integrated circuit architecture for in-memory computing matrix-vector multipliers such that the computational latency is inversely proportional to the incoming magnitude of neuron activations. The main contribution of the present invention is that the proposed circuit is self-aware of the computational latency. At the end of the generated data pulses in which the number of pulses is proportional to the magnitude of incoming neuron activations, the circuit generates an end-of-computation flag such that the computing circuit can shorten the processing time of matrix-vector multiplications. The present invention can be integrated with any kind of analogue readout circuit, such as oscillator-based analog-to-digital converter (ADC), or successive approximation register (SAR) ADC. The proposed circuit can be integrated with any kind of memory elements, such as static random-access memory (SRAM), memristors, etc.

It is to be noted the above-described method may be modified in many ways. For instance, instead of operating as a down-counter, the counter 16 may operate as an up-counter counting up to a given threshold value. In this case, at step 48 the CKC signal would be used to up-count the counter until the given threshold value is reached. Furthermore, instead of an action being triggered at a rising or falling edge, the action could be triggered at a falling or rising edge, respectively. Moreover, a different arrangement of logic gates may be used depending how the signals are arranged.

The method steps described above may be carried out by suitable circuits or circuitry when the process is implemented in hardware or using hardware for individual steps. However, the method or at least some of the method steps may also or instead be implemented in software. Thus, at least some of the method steps can be considered as computer-implemented steps. The terms "circuits" and "circuitry" refer to physical electronic components or modules (e.g., hardware), and any software and/or firmware ("code") that may configure the hardware, be executed by the hardware, and or otherwise be associated with the hardware. The circuits may thus be operable (i.e., configured) to carry out or they comprise means for carrying out the required method steps as described above.

While the invention has been illustrated and described in detail in the drawings and foregoing description, such illustration and description are to be considered illustrative or exemplary and not restrictive, the invention being not limited to the disclosed embodiment. Other embodiments and variants are understood, and can be achieved by those skilled in the art when carrying out the claimed invention, based on a study of the drawings, the disclosure and the appended claims. Further embodiments may be obtained by combining any of the teachings above.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of computing for an in-memory computing system (1), the method comprising:
a set of in-memory computing counters (9) of an in-memory computing driver (3) receiving (41) a set of input neuron data sets through a set of input data lines;
the in-memory computing driver (3) setting (43) an end-of-computation signal to a first end-of-computation signal value once an in-memory computing clock signal changes from a first signal value to a second signal value;
the set of in-memory computing counters (9) registering (44) the set of input neuron data sets, a respective in-memory computing counter (9) registering a respective input neuron data set received through a respective input data line during a respective time window;
the set of in-memory computing counters (9) initialising (45) a set of internal counters (16) with the set of input neuron data sets, a respective internal counter (16) being initialised with the respective input neuron data set;
setting (47) the value of a respective flag signal of the respective in-memory computing counter (9) to a first flag value if the value of the respective internal counter (16) deviates from a first counter value, and increasing or decreasing (48) the value of the respective internal counter (16) during an adjustment cycle until the value of the respective internal counter (16) equals the first counter value, and generating (49) a respective set of signal pulses during the adjustment cycle to be fed to a memory array (5), the number of signal pulses generated during the adjustment cycle by the respective in-memory computing counter (9) being proportional to the magnitude of the respective input neuron data set received by the respective in-memory computing counter (9) during the respective time window;
setting the value of the respective flag signal of the respective in-memory computing counter (9) to a second flag value if the value of the respective internal counter (16) equals the first counter value; and
the in-memory computing driver (3) setting (53) the end-of-computation signal to a second end-of-computation signal value if the values of the flag signals of all the in-memory computing counters (9) of the in-memory computing driver (3) equal the second flag value.

2. The method according to claim 1, wherein a signal pulse is generated every time the value of the respective internal counter (16) is increased or decreased.

3. The method according to claim 1 or 2, wherein the first counter value equals a signal low value, the first flag value equals a signal high value, the second flag value is a signal low value, and wherein the internal counters (16) operate as down-counters decreasing the value of the internal counters (16) by one at a frequency of a clock signal (CKC).

4. The method according to any one of the preceding claims, wherein the first end-of-computation signal value is a signal high value, and the second end-of-computation signal value is a signal low value, and/or the end-of-computation signal is set to the first end-of-computation signal value as soon as the in-memory computing clock signal changes from a signal low value to a signal high value, or vice versa, and the end-of-computation signal is set to the second end-of-computation signal value if the values of the flag signals of all the in-memory computing counters (9) of the in-memory computing driver (3) equal the second flag value but only upon the in-memory computing clock signal changing from a signal low value to a signal high value, or vice versa.

5. The method according to any one of the preceding claims, wherein the set of internal counters (16) are initialised after a given delay from the registration of the set of input neuron data sets.

6. The method according to any one of the preceding claims, wherein the change of the end-of-computation signal to the first end-of-computation signal value is indicative of a beginning of a signal computation cycle, and the change of the end-of-computation signal to the second end-of-computation signal value is indicative of an end-of-the signal computation cycle.

7. The method according to any one of the preceding claims, wherein the method further comprises the step of feeding the end-of-computation signal to a memory array (5).

8. The method according to any one of the preceding claims, wherein the end-of-computation signal is generated by an end-of-computation circuit (7) comprising an arrangement of logic OR gates such that the second end-of-computation signal value is obtained as soon as the in-memory computing clock signal changes from the second signal value to the first signal value, and the values of the flag signals of all the in-memory computing counters (9) of the in-memory computing driver (3) equal the second flag value.

9. The method according to any one of the preceding claims, wherein the respective in-memory counter (9) comprises a respective input register (15) for registering the respective input neuron data set, the respective internal counter (16), a respective reset operator (17) for the respective internal counter (16) and configured to receive a latch signal and the respective input neuron data set as an input data set, a respective pulse generator (19) for generating the latch signal, and a respective flag controller (20) for generating the respective flag signal and the respective set of signal pulses.

10. The method according to claim 9, wherein the respective internal counter (16) comprises an individual flip-flop circuit (23) for each bit position of the respective input neuron data set such that a respective individual flip-flop circuit is arranged to output a single bit value of the respective flip-flop circuit.

11. The method according to claim 10, wherein the respective flag controller (20) comprises an arrangement of logic gates and is configured to receive as inputs the single bit values of the respective flip-flop circuit (23) or their inverted values and output the respective flag signal, the respective set of signal pulses, and a clock signal to be fed to the respective internal counter (16).

12. The method according to any one of claims 9 to 11, wherein the respective reset operator (17) comprises an individual multiplexer circuit for each bit position of the respective input neuron data set to feed an individual bit to a respective individual flip-flop circuit (23) of the counter (16).

13. The method according to any one of the preceding claims, wherein the duty cycle of the in-memory computing clock signal is greater than 50%.

14. A computer program product comprising instructions for implementing the steps of the method according to any one of the preceding claims when loaded and run on an electronic device.

15. A computing device (3) for an in-memory computing memory (5), the computing device (3) comprising a set of in-memory computing counters (9), the computing device comprising means for:
receiving by the set of in-memory computing counters (9) a set of input neuron data sets through a set of input data lines;
setting an end-of-computation signal to a first end-of-computation signal value once an in-memory computing clock signal changes from a first signal value to a second signal value;
registering by the set of in-memory computing counters (9) the set of input neuron data sets, a respective in-memory computing counter (9) registering a respective input neuron data set received through a respective input data line during a respective time window;
initialising by the set of in-memory computing counters (9) a set of internal counters (16) with the set of input neuron data sets, a respective internal counter (16) being initialised with the respective input neuron data set;
setting the value of a respective flag signal of the respective in-memory computing counter (9) to a first flag value if the value of the respective internal counter (16) deviates from a first counter value, and increasing or decreasing the value of the respective internal counter (16) during an adjustment cycle until the value of the respective internal counter (16) equals the first counter value, and generating a respective set of signal pulses during the adjustment cycle to be fed to a memory array (5), the number of signal pulses generated during the adjustment cycle by the respective in-memory computing counter (9) being proportional to the magnitude of the respective input neuron data set received by the respective in-memory computing counter (9) during the respective time window;
setting the value of the respective flag signal of the respective in-memory computing counter (9) to a second flag value if the value of the respective internal counter (16) equals the first counter value; and
setting the end-of-computation signal to a second end-of-computation signal value if the values of the flag signals of all the in-memory computing counters (9) of the in-memory computing driver (3) equal the second flag value.
